Europäisches Patentamt

European Patent Office

Office européen des brevets

(11) Publication number: **0 142 276**
**B1**

(12) **EUROPEAN PATENT SPECIFICATION**

(45) Date of publication of patent specification: **09.08.89**

(21) Application number: **84306974.1**

(22) Date of filing: **12.10.84**

(51) Int. Cl.⁴: **A 01 N 47/38** // (A01N47/38, 33:20)

(54) Anti-microbial composition.

(30) Priority: **20.10.83 GB 8328061**

(43) Date of publication of application:
**22.05.85 Bulletin 85/21**

(45) Publication of the grant of the patent:
**09.08.89 Bulletin 89/32**

(84) Designated Contracting States:
**AT BE CH DE FR GB IT LI LU NL SE**

(56) References cited:
CH. WORTHING:" The Pesticide Manual, 6th edition 1979, pages 57, 436 published by The British Crop Protection Council, CROYDON (GB)

(73) Proprietor: SCHERING AGROCHEMICALS LIMITED
Hauxton Cambridge CB2 5HU (GB)

(72) Inventor: Barnes, Geoffrey
90 Cambridge Road
Great Shelford Cambridge (GB)

(74) Representative: Waldman, Ralph David et al
Schering Agrochemicals Limited Industrial Property Department Chesterford Park Research Station
Saffron Walden Essex CB10 1XL (GB)

Courier Press, Leamington Spa, England.

## EP 0 142 276 B1

**Description**

This invention relates to compositions with useful antimicrobial properties.

The present invention provides an antimicrobial composition comprising

a) 1-[N-propyl-N-2-(2,4,6-trichlorophenoxy)ethylcarbamoyl]-imidazole, or its complex with manganese chloride, and

b) 2-bromo-2-nitro-1,3-propanediol,

in which the weight ratio of a) to b) is from 6:1 to 1:6 Component a) is a known fungicide having the common name prochloraz. Component b) is a known antibacterial agent having the common name bronopol. These names will be used in this specification to designate these compounds.

We have found that the composition of the invention have advantageous properties over the individual components and that synergism is often demonstrated, and when used in agriculture yield of crop may be increased.

In addition other pesticides may be employed in conjuction with the active ingredients described above providing they do not adversely affect the interaction between the components.

The compositions of the invention are active against a wide range of microbes and especially fungi and bacteria which attack wood and crops such as mushrooms, fruits and cotton. Diseases that may be controlled include *Verticilium* spp., *Mycognone* spp., *Hypomyces* spp., *Pseudomonas* spp., *Lenzites* spp., *Aspergillus* spp., *Penicillium* spp. and *Xanthomonas* spp.

The prochloraz is preferably in the form of its metal complex with manganous chloride, in which the molar ratio of prochloraz to manganese is 4:1. This is described in our British Patent 1,567,521. The compositions of the invention may be employed in many forms and are often more conveniently prepared in aqueous form immediately prior to use. One method of preparing such a composition is referred to as "tank mixing" in which the fungicidal ingredients in their commercially available form are mixed together by the user in a quantity of water.

In addition to tank mixing immediately prior to use the compositions containing prochloraz and bronopol may be formulated into a more concentrated primary composition which is diluted with water or other diluent before use. Such compositions may comprise a surface active agent in addition to the active ingredients and examples of such compositions are as follows.

It can be dispersible solution which comprises the active ingredients dissolved in a water-immiscible solvent with the addition of a dispersing agent.

Alternatively it can comprise the ingredients in the form of a finely ground powder in association with a dispersing agent and intimately mixed with water to give a paste or cream which can if desired be added to an emulsion of oil in water to give a dispersion of active ingredients in an aqueous oil emulsion.

An emulsifiable concentrate comprises the active ingredient dissolved in a water-immiscible solvent which is formed into an emulsion with water in the presence of an emulsifying agent.

A granular solid comprises the active ingredients associated with poser diluents such as kaolin, which mixture is granulated by known methods. Alternatively it comprises the active ingredients adsorbed or absorbed on a pre-granular diluent, for example Fuller's earth, attapulgite or limestone grit.

A dispersible or wettable powder usually comprises the active ingredients in admixture with a suitable surfactant and an inert powder diluent such as china clay.

Another suitable concentrate is a flowable suspension concentrate which is formed by grinding the active ingredients with water, a wetting agent and a suspending agent.

In some circumstances it may be desirable to combine two types of formulation e.g. one of the components is present in an emulsifiable concentrate and the second components is dispersed as a powder in this concentrate.

The concentration of the active ingredients (when used as the sole active components) in a composition for direct application to the crop by conventional ground methods is preferably within the range of 0.001 to 10 per cent by weight of the composition, especially 0.005 to 5 per cent by weight, but more concentrated compositions containing up to 40 per cent may be desirable in the case of aerial sprays.

As a further aspect, the invention includes a method for controlling phytopathogenic microbes which comprises applying to seeds, plants and other vegetative material or their habitat, the above described composition.

## Example

Aqueous suspensions of prochloraz and bronopol were prepared and incorporated into agar in amounts to give the required concentration of active ingredient in the agar. The molten agar was then poured into 9 cm. Petri dishes and allowed to set. The agar in each dish was inoculated with an agar culture of *Lenzites trabea* and the dishes were incubated at 20°C for 13 days. The colony diameters were then measured and the amount of growth expressed as a percentage of the growth observed with a control calculated. The observed growth as a percentage of control is shown in the Table.

2

TABLE

| Concentration of Prochloraz (ppm) | Concentration of bronopol (ppm) | Observed growth as percentage of control | Expected growth as percentage of control ($E_1$) |
|---|---|---|---|
| 3.5 | 0 | 38.4 | |
| 20.0 | 0 | 24.7 | |
| 0 | 3.5 | 97.4 | |
| 0 | 20.0 | 80.6 | |
| 3.5 | 3.5 | 29.9 | 37.4 |
| 20.0 | 20.0 | 11.6 | 19.9 |
| 3.5 | 20.0 | 15.0 | 31.0 |
| 20.0 | 3.5 | 20.3 | 24.1 |

To indicate the existence of synergism between the active components the results were treated in the manner described by Colby S. R. (1967 Calculating Synergistic and Antagonistic Responses of Herbicide Combinations. Weeds *15*, 20—22). The calculated values of $E_1$ the expected growth as a percentage of control was calculated from the equation

$$E_1 = \frac{X_1 Y_1}{100}$$

wherein $X_1$ is the growth as a percentage of control of prochloraz at a given concentration when used alone and Y1 is the growth as a percentage of control with bronopol at a given concentration when used alone. If the observed growth is less than $E_1$ the results indicate synergism. In the Table above the results with the mixture do show evidence of synergism.

**Claims**

1. An antimicrobial composition comprising
a) 1-[N-propyl-N-2-(2,4,6-trichlorophenoxy)ethylcarbamoyl]imidazole, or its complex with manganese chloride, and
b) 2-bromo-2-nitro-1,3-propanediol,
in which the weight ratio of a) to b) is from 6:1 to 1:6.
2. A method for controlling phytopathogenic microbes which comprises applying to seeds, plants and other vegetative material or their habitat a composition as claimed in claim 1.

**Patentansprüche**

1. Eine antimikrobielle Komposition aus
a) 1-[N-Propyl-N-(2-(2,4,6-trichlorophenoxy)-ethyl)-carbamoyl]-imidazol, oder seinem Komplex mit Manganchlorid, und
b) 2-Brom-2-nitro-1,3-propandiol,
in der das Gewichtsverhältnis von a) zu b) von 6:1 bis 1:6 beträgt.
2. Ein Verfahren zur Bekämpfung von phytopathogenen Mikroorganismen, dadurch gekennzeichnet, daß eine Komposition gemäß Anspruch 1 auf Samen, Pflanzen und anderes pflanzliches Material oder deren Standort angewandt wird.

**Revendications**

1. Composition antimicrobienne comprenant
a) du 1-[N-propyl-N-2-(2,4,6-trichlorophénoxy)éthylcarbaqmoyl]imidazole, ou son complexe avec la chlorure de manganèse, et
b) du 2-bromo-2-nitro-1,3-propanediol,
dans laquelle le rapport de a) à b) est de 6:1 à 1:6.
2. Procédé pour combattre les microbes phytopatogènes, qui comprend l'application, sur les semences, les plantes et autres matières végétatives ou sur leur habitat d'une composition suivant la revendication 1.